# EUROPÄISCHE PATENTANMELDUNG

(11) **EP 1 714 541 A1**
(43) Veröffentlichungstag der Anmeldung: **25.10.2006**
(21) Anmeldenummer: 06006466.4
(22) Anmeldetag: 29.03.2006
(51) Int. Cl.: A01C 17/00

(54) **Schleuderstreuer**

(30) Priorität: 20.04.2005 DE 102005018217
(71) Anmelder: Amazonen-Werke H. Dreyer GmbH & Co. KG, 49205 Hasbergen (DE)
(72) Erfinder: Walter, Achim, 49078 Osnabrück (DE); Krabbe, Ulrich, 49205 Hasbergen (DE)

(57) **Zusammenfassung**

Schleuderstreuer für rieselfähiges Material, insbesondere Dünger, mit einem Vorratsbehälter (1) mit wenigstens einer einstellbaren Auslauföffnung (5) und einer darunter um eine versetzt zur Auslauföffnung (5) angeordneten Drehachse (14) umlaufenden Schleuderscheibe (7) mit zumindest zwei sich zum oder über den Scheibenrand der Schleuderscheibe (7) erstreckenden Wurfflügeln (17), wobei den Wurfflügeln (17) von dem Scheibeninneren nach außen spiralförmig verlaufende und auf der Schleuderscheibe (7) angeordnete, aufrecht stehende Zuführstege zugeordnet sind. Um eine ruhige Einleitung der aus dem Vorratsbehälter (1) der Schleuderscheibe im Fallstrom zu dosierten Düngerkörner in vorbeschleunigter Weise den Wurfschaufeln (17) zu erreichen, ist vorgesehen, dass die radial äußeren Enden (20) der Zuführstege (16) zumindest direkt an die inneren Enden (18) der Wurfflügel (17) anschließen, und dass auf der Schleuderscheibe (7) nur eine den Wurfflügeln (17) entsprechende Anzahl von Zufuhrstegen (16) angeordnet ist, so dass jeden Wurfflügel (17) nur ein Zufuhrsteg (15) zugeordnet ist.

## Beschreibung

Die Erfindung betrifft einen Schleuderstreuer gemäß des Oberbegriffes des Patentanspruches 1.

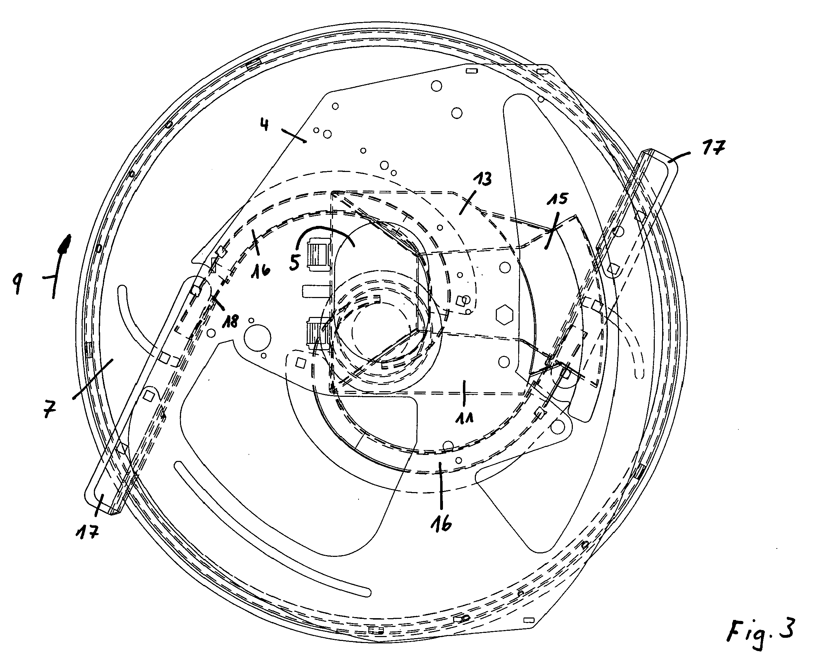

Ein derartiger Schleuderstreuer ist beispielsweise in der DE 43 40 185 A1 beschrieben. Dieser Schleuderstreuer zum Ausbringen von gekörnten Düngemitteln weist gemäß des Ausführungsbeispiels nach Fig. 3 eine kegelförmige Erhebung auf. Die Oberfläche der kegelförmigen Erhöhung weist spiralförmig verlaufende Zuführstege zum Zuleiten des Düngers in die auf der Schleuderscheibe angeordneten Wurfschaufeln auf. Es ist eine wesentlich höhere Anzahl von spiralförmigen Zuführstegen als Wurfschaufeln vorgesehen. Die spiralförmigen Zuführstege beschleunigen den Dünger und leiten ihn vorbeschleunigt den Wurfschaufeln zu. Aufgrund der Vielzahl von spiralförmigen Zuführstegen erfolgt eine unkontrollierte Vorbeschleunigung des Düngers bevor er von den Wurfschaufeln erfasst wird. Auch prallen von den Zuführstegen die Düngerkörner teilweise unkontrolliert ab.

Der Erfindung liegt die Aufgabe zugrunde, eine ruhige Einleitung der aus dem Vorratsbehälter der Schleuderscheibe im Fallstrom zu dosierten Düngerkörner in vorbeschleunigter Weise den Wurfschaufeln zu erreichen.

Diese Aufgabe wird erfindungsgemäß durch die kennzeichnenden Merkmale des Patentanspruches 1 gelöst. Infolge dieser Maßnahme wird der von den Zuführstegen erfasste Düngerstrom, der im Fallstrom aus dem Vorratsbehälter über dem zugeordneten Dosierorgan der Schleuderscheibe zugeführt wird, in einen konzentrierten Materialstrom der jeweiligen Wurfschaufel übergeben.

Um den im Fallstrom der Schleuderscheibe zugeleiteten Düngerstrom erfassen und in konzentrierter Weise der Wurfschaufel zuleiten zu können, ist vorgesehen, dass der spiralförmige Zuführsteg über einen Winkelsektor von mindestens 180°, vorzugsweise 270° verläuft.

Um den Zufuhrstrom an unterschiedliche Einstellungen der Wurfschaufeln anpassen zu können, ist vorgesehen, dass der Zufuhrsteg verstellbar auf der Schleuderscheibe angeordnet ist.

Ein besonders vorteilhaftes Erfassen des im Fallstrom der Schleuderscheibe zugeleiteten Düngerstromes wird dadurch erreicht, dass die Oberseite des Zufuhrsteges gegenüber dem unteren Bereich, auf die Drehrichtung der Schleuderscheiben bezogen, voreilend verläuft.

Versuche haben gezeigt, dass es vorteilhaft ist, dass die Steigung der Spirale des spiralförmigen Zuführsteges zumindest 100 mm über ihren Verlauf beträgt.

Um den Düngerstrom in vorteilhafter Weise der Schleuderscheibe zu zuleiten, ist vorgesehen, dass unterhalb der Auslauföffnung ein zumindest drei trichterförmig verlaufende Seitenwände aufweisender Auslaufschacht angeordnet ist.

Damit der Auslaufschacht den Austrag des Düngers von der Auslauföffnung zur Schleuderscheibe vorteilhaft beeinflusst, ist vorgesehen, dass die der Drehachse der Schleuderscheibe abgewandte Seitenwand des Auslaufschachtes schräg von oben-innen nach unten außen in Richtung des Scheibenäußeren der Schleuderscheibe verläuft.

Um den Dünger der Schleuderscheibe gezielt zuleiten zu können, ist des weiteren vorgesehen, dass unterhalb der Auslauföffnung eine im Querschnitt U-förmig und trichterförmig ausgebildete Zuführungsrutsche angeordnet ist, deren der Drehachse abgewandte und schräge von oben-innen nach unten-außen verlaufender Seitenbereich durch eine Abdeckfläche abgedeckt ist.

Um eine kontrollierte Übergabe des Düngers von dem Auslaufschacht in den Zuführsteg zu gewährleisten, ist vorgesehen, dass der Auslaufschacht oder -rutsche dicht oberhalb des spiralförmigen Zuführsteges endet.

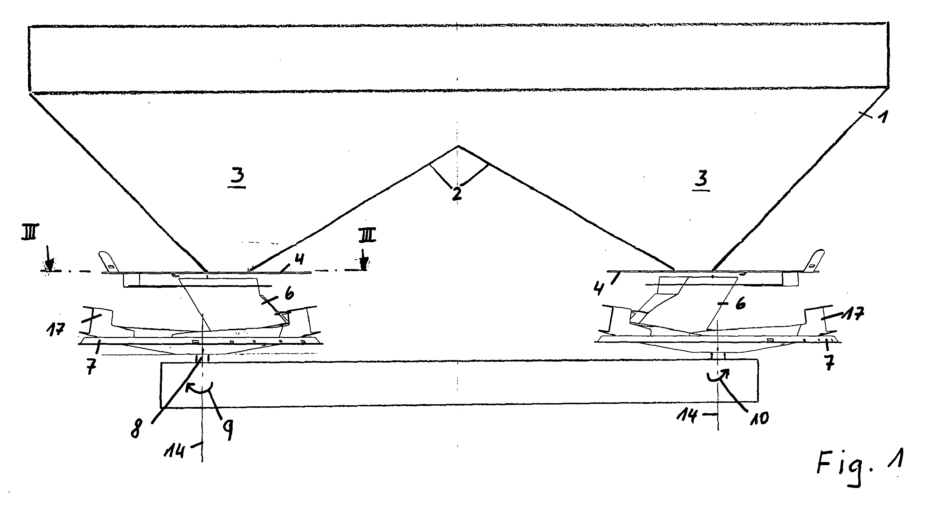

Weitere Einzelheiten der Erfindung sind den übrigen Unteransprüchen, der Beispielsbeschreibung und den Zeichnungen zu entnehmen. Hierbei zeigen
- Fig. 1: den Schleuderdüngerstreuer in der Ansicht von hinten und in Prinzipdarstellung,

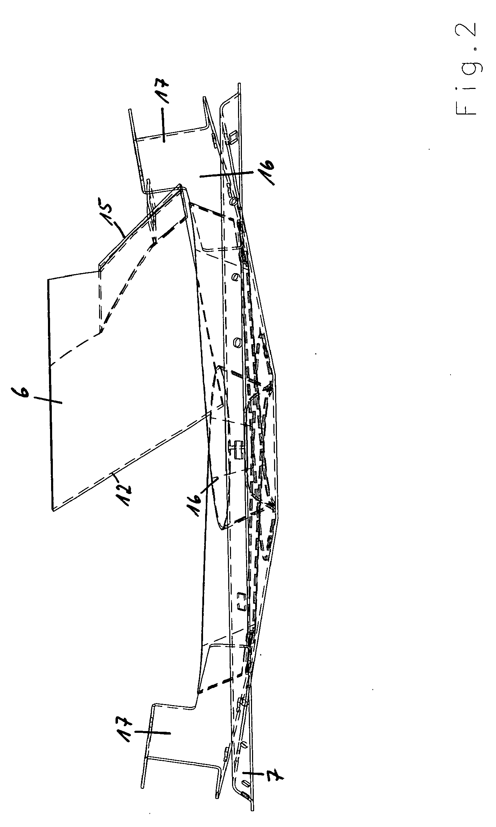

- Fig. 2: die linke Schleuderscheibe mit Auslaufschacht in der Ansicht von hinten,
- Fig. 3: die linke Schleuderscheibe mit dem zugeordneten Auslaufschacht und der zugeordneten Bodenplatte des Vorratsbehälters in der Ansicht III/III,

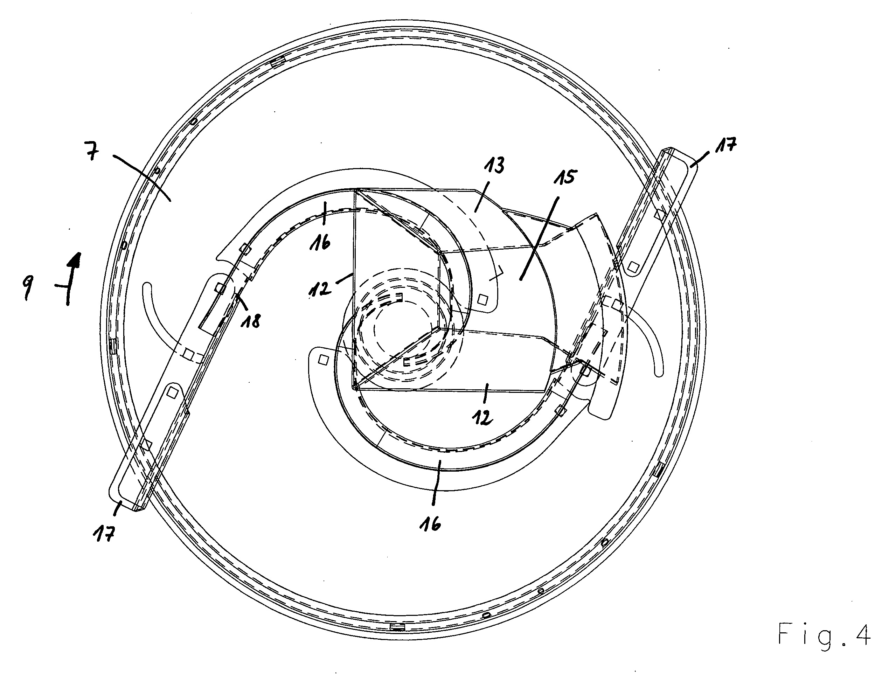

- Fig. 4: die Schleuderscheibe mit Zulaufschacht in der Draufsicht und

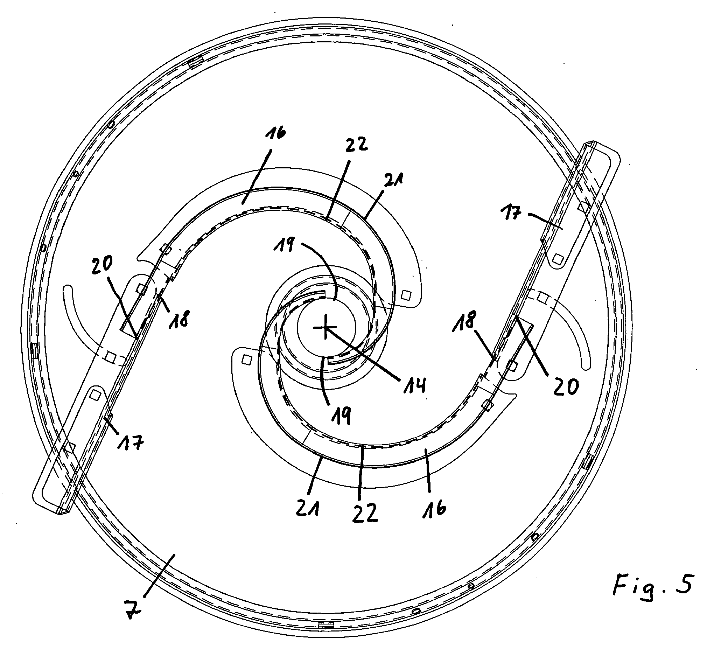

- Fig. 5: die Schleuderscheibe in der Draufsicht.

Der Schleuderstreuer weist den Vorratsbehälter 1 auf, der durch das dachförmige Mittelteil 2 in zwei Auslauftrichter 3 unterteilt ist. Die Auslauftrichter 3 werden jeweils durch eine Bodenplatte 4 verschlossen. In der jeweiligen Bodenplatte 4 befindet sich die Auslauföffnung 5, die durch einen einstellbaren und nicht dargestellten Schieber in ihrer Öffnungsweite einstellbar ist. Unterhalb der Auslauföffnung 5 befindet sich der Auslaufschacht 6, über den das aus dem Vorratsbehälter durch die Auslauföffnung 5 im Fallstrom zu dosierte Material der unterhalb des Auslaufschachtes 6 angeordneten Schleuderscheibe 7 zugeleitet wird. Die Schleuderscheiben 7 sind jeweils auf einer Antriebswelle 8 angeordnet und werden von einer nicht dargestellten Kraftquelle in Pfeilrichtung 9 und 10 rotierend angetrieben.

Der unterhalb der Auslauföffnung 5 angeordnete Auslaufschacht 6 weist drei trichterförmig verlaufende Seitenwände 11, 12, 13 auf, die der Drehachse 14 der Schleuderscheibe 7 abgewandte Seitenwand 15 des Auslaufschachtes 6 verläuft schräg von oben innen nach unten außen in Richtung des Scheibenäußeren der Schleuderscheibe 7 und bildet die Abdeckfläche des Auslaufschachtes 6. Diese vierte Seitenwand 15 ist mit den trichterförmig verlaufenden Seitenwänden 11, 12, 13 verbunden. Der Auslaufschacht 6 endet dicht oberhalb der auf der Schleuderscheibe 7 spiralförmig angeordneten Zuführstege 16. Auf der Schleuderscheibe 7 sind zwei dem Winkel einstellbare Wurfflügel 17 angeordnet. Zwischen den inneren Enden 18 der Wurfflügel 17 und dem Scheibeninneren 19 sind von dem Scheibeninneren 19 nach außen spiralförmig verlaufende aufrecht stehende Zuführstege 16 auf der Schleuderscheibe 7 angeordnet. Die radial äußeren Enden 20 der Zuführstege 16 schließen an die inneren Enden 18 der Wurfflügel 17 direkt an bzw. überlappen sich die äußeren Enden 20 der Zuführstege 16 und die inneren Enden 18 der Wurfflügel 17 über einen kurzen Bereich. Auf der Schleuderscheibe 7 ist jedem Wurfflügel 17 ein spiralförmig verlaufender Zuführsteg 16 angeordnet, so dass auf der Schleuderscheibe 7 nur eine den Wurfflügeln 17 entsprechende Anzahl von Zuführstegen 16 angeordnet ist, so dass jeden Wurfflügel 17 nur ein Zufuhrsteg 16 zugeordnet ist.

Jeder spiralförmige Zuführsteg 16 verläuft über einen Winkelsektor von mindestens 180°, vorzugsweise 270°. Jeder Zuführsteg 16 ist verstellbar auf der Schleuderscheibe 7 angeordnet, um sich so den jeweiligen Einstellungen des Wurfflügels 17 anpassen zu können. Die Oberseite 21 des Zuführsteges 16 verläuft gegenüber ihrem unteren Bereich 22, auf die Drehrichtung der Schleuderscheibe 7 bezogen, voreilend. Die Steigung der Spirale des spiralförmigen Zuführsteges 16 beträgt zumindest 100mm über ihren Verlauf. Durch den voreilenden Verlauf der Oberseite 21 des Zuführsteges 16 gegenüber ihren unteren Bereich 22 ist der Steg des Zuführsteges mit ihrer Oberseite 21 gegenüber ihrer Unterseite 22 in Drehrichtung nach vorn gekippt angeordnet.

Die Funktionsweise der Zuführstege 16 für jeden Wurfflügel 17 ist folgende:

Je nach gewünschter Ausbringmenge wird die Auslauföffnung 5 durch einen Schieber in ihrer Öffnungsgröße eingestellt. Das sich im Vorratsbehälter 1 befindliche Material gelangt über die Auslauföffnung 5 und dem trichterförmig ausgebildeten Auslaufschacht 6 im Fallstrom auf die Schleuderscheibe 7. Wenn der zudosierte Düngerstrom den Auslaufschacht 6 verlässt, wird er von dem jeweiligen spiralförmigen Zuführsteg 16 erfasst und in schonender Weise und in konzentrierter und kompakter Form von den Zuführsteg 16 in schonender Weise beschleunigt und aufgrund der auftretenden Zentrifugalkraft nach außen geführt und in den zugeordneten Wurfflügel 17 übergeben. Von den Wurfflügeln 17 wird der Düngerstrom in breitwürfiger Verteilung über die Bodenoberfläche abgeschleudert und in gleichmäßiger Weise verteilt.

## Patentansprüche

1. Schleuderstreuer für rieselfähiges Material, insbesondere Dünger, mit einem Vorratsbehälter mit wenigstens einer einstellbaren Auslauföffnung und einer darunter um eine versetzt zur Auslauföffnung angeordneten Drehachse umlaufenden Schleuderscheibe mit zumindest zwei sich zum oder über den Scheibenrand der Schleuderscheibe erstreckenden Wurfflügeln, wobei den Wurfflügeln von dem Scheibeninneren nach außen spiralförmig verlaufende und auf der Schleuderscheibe angeordnete, aufrecht stehende Zuführstege zugeordnet sind, **dadurch gekennzeichnet, dass** die radial äußeren Enden (20) der Zuführstege (16) zumindest direkt an die inneren Enden (18) der Wurfflügel (17) anschließen, und dass auf der Schleuderscheibe (7) nur eine den Wurfflügeln (17) entsprechende Anzahl von Zufuhrstegen (16) angeordnet ist, so dass jeden Wurfflügel (17) nur ein Zufuhrsteg (15) zugeordnet ist.

2. Schleuderstreuer nach Anspruch 1, **dadurch gekennzeichnet, dass** der spiralförmige Zufuhrsteg (16) über einen Winkelsektor von mindestens 180°, vorzugsweise 270° verläuft.

3. Schleuderdüngerstreuer nach Anspruch 1, **dadurch gekennzeichnet, dass** der Zufuhrsteg (16) verstellbar auf der Schleuderscheibe (7) angeordnet ist.

4. Schleuderdüngerstreuer nach Anspruch 1, **dadurch gekennzeichnet, dass** die Oberseite (21) des Zufuhrsteges (16) gegenüber dem unteren Bereich (22), auf die Drehrichtung der Schleuderscheiben (7) bezogen, voreilend verläuft.

5. Schleuderdüngerstreuer nach Anspruch 1, **dadurch gekennzeichnet, dass** die Steigung der Spirale des spiralförmigen Zuführsteges (16) zumindest 100mm/über ihren Verlauf beträgt.

6. Schleuderdüngerstreuer nach Anspruch 1, **dadurch gekennzeichnet, dass** die Wurfschaufel (17) winkelverstellbar auf der Schleuderscheibe (7) angeordnet ist.

7. Schleuderdüngerstreuer nach Anspruch 1, **dadurch gekennzeichnet, dass** unterhalb der Auslauföffnung (5) ein zumindest drei trichterförmig verlaufende Seitenwände (11, 12, 13, 15) aufweisender Auslaufschacht (6) angeordnet ist.

8. Schleuderdüngerstreuer nach Anspruch 7, **dadurch gekennzeichnet, dass** die der Drehachse (14) der Schleuderscheibe (7) abgewandte Seitenwand (15) des Auslaufschachtes (6) schräg von oben-innen nach unten außen in Richtung des Scheibenäußeren der Schleuderscheibe (7) verläuft.

9. Schleuderdüngerstreuer nach Anspruch 7, **dadurch gekennzeichnet, dass** die vierte Seitenwand (15), welche der Drehachse (14) der Schleuderscheibe (7) abgewandt ist, von oben-innen nach unten außen in Richtung des Scheibenäußeren der Schleuderscheibe (7) verläuft.

10. Schleuderdüngerstreuer nach Anspruch 1, **dadurch gekennzeichnet, dass** unterhalb der Auslauföffnung (5) eine im Querschnitt U-förmig und trichterförmig ausgebildete Zuführungsrutsche (6) angeordnet ist, deren der Drehachse (14) abgewandte und schräg von oben-innen nach unten-außen verlaufender Seitenbereich durch eine Abdeckfläche (15) abgedeckt ist.

11. Schleuderdüngerstreuer nach Anspruch 7 bis 10, **dadurch gekennzeichnet, dass** der Auslaufschacht (6) oder -rutsche dicht oberhalb des spiralförmigen Zuführsteges (16) endet.
